# EUROPÄISCHE PATENTSCHRIFT

(11) **EP 1 051 709 B1**
(45) Veröffentlichungstag und Bekanntmachung des Hinweises auf die Patenterteilung: **20.03.2002**
(21) Anmeldenummer: 98966507.0
(22) Anmeldetag: 04.12.1998
(51) Int. Cl.: G11B 33/14, G11B 33/12

(54) **VORRICHTUNG ZUR AUFNAHME EINES FESTPLATTEN-LAUFWERKS**
DEVICE FOR LOCATING A HARD DISK DRIVE
DISPOSITIF DESTINE A RECEVOIR UNE UNITE DE DISQUE DUR

(30) Priorität: 28.01.1998 DE 19803189
(43) Veröffentlichungstag der Anmeldung: 15.11.2000
(73) Patentinhaber: Fujitsu Siemens Computers GmbH, 81739 München (DE)
(72) Erfinder: RIEBEL, Michael, D-86438 Kissing (DE); SCHELSHORN, Lorenz, D-80797 München (DE)
(74) Vertreter: Hermann, Uwe, Dipl.-Ing.
(86) Internationale Anmeldenummer: DE9803569
(87) Internationale Veröffentlichungsnummer: WO9939349

(56) Entgegenhaltungen:
- EP-A- 0 309 279
- EP-A- 0 564 119
- EP-A- 0 766 459
- WO-A-95/32457
- DE-U- 29 706 384
- US-A- 5 426 562
- PATENT ABSTRACTS OF JAPAN vol. 098, no. 013, 30. November 1998 & JP 10 207571 A (NEC SHIZUOKA LTD), 7. August 1998

## Beschreibung

Die Erfindung bezieht sich auf eine Vorrichtung gemäß dem Oberbegriff des Patentanspruchs 1.

Festplatten-Laufwerke werden heute in üblicher Weise in ihrer ausgelieferten Form an einem freien Platz im Einbaurahmen eines Computers entweder direkt oder über Anpaßschienen mittels mehrerer Schrauben befestigt. Festplatten-Laufwerke rufen bei ihrem Betrieb bekanntlich Lärm und Körperschall hervor, die insbesondere bei der Arbeit am Rechner stören können. Außerdem erzeugen sie Verlustwärme, die zu Funktionsstörungen des Festplatten-Laufwerks führen kann. Bei den heute üblichen Vorrichtungen zur Aufnahme eines Festplatten-Laufwerks sind keine Maßnahmen zur Dämmung von Lärm und Körperschall vorgesehen. Außerdem wird die Verlustwärme in vielen Fällen, insbesondere bei einem gedrängtem Rechneraufbau und bei der Verwendung hoch leistungsfähiger. Festplatten-Laufwerke, nur unzureichend an den Einbaurahmen und damit an das Chassis des Rechners abgeführt.

Aus Patent Abstracts of Japan, vol. 98, no. 13 (30.11.98) zu JP-A-10-207 571 ist eine Vorrichtung zur Befestigung eines Festplattenlaufwerks in einem Computer bekannt, bei der das Laufwerk mittels eines das Laufwerk umschließenden Bügels an das Computerchassis angeschraubt wird. Zwischen Laufwerk und Bügel ist eine Wärmeleitplatte aus Gummi vorgesehen, die sowohl, durch ihre Elastizität, der Geräuschdämmung, als auch, durch ihre Wärmeleitfähigkeit, einer besseren Wärmeabfuhr dient.

Der Erfindung liegt die Aufgabe zugrunde, eine Vorrichtung zur Aufnahme eines zu einem Einbau in einen Computer, insbesondere einem Personal Computer, vorgesehenen Festplatten-Laufwerks anzugeben, die dafür sorgt, daß Lärm und Körperschall von Festplatten-Laufwerken bei gleichzeitiger Abführung der Verlustwärme des Laufwerks zum Chassis des Rechners gedämmt werden.

Diese Aufgabe wird bei einer gattungsgemäßen Vorrichtung gemäß der Erfindung durch die im kennzeichnenden Teil des Patentanspruchs 1 angegebenen Merkmale gelöst. Das Festplatten-Laufwerk ist im fertig montierten Zustand seiner Aufnahmevorrichtung demnach in einer durch die Metallwanne und deren Metalldeckel gebildeten Metallkapsel völlig eingeschlossen.

Die Vorrichtung nach der Erfindung hat den Vorteil sowohl einer einfachen Montage als auch einer leichten Demontierbarkeit. Es ist in vorteilhafter Weise auch weder eine zusätzliche Lärmdämmung noch eine zusätzliche Körperschalldämmung in der Systemeinheit erforderlich. Im zusammengebauten Zustand der Vorrichtung nach der Erfindung besteht aufgrund der völligen Metallkapselung des Festplatten-Laufwerks bei dessen gleichzeitiger elektrischer Isolierung Berührungsschutz. Durch die Erfindung wird somit eine vollständige Metallkapselung unter Zuhilfenahme von marktverfügbaren Materialien zur Wärmeableitung der Verlustwärme zum Chassis des Rechners und gleichzeitig eine elektrische Isolierung des Laufwerks erstmalig in diesem Anwendungsbereich erreicht. Die beim Betrieb des Festplatten-Laufwerks entstehende Verlustwärme wird über die Wärmeleitmatten auf die gesamte aus der Metallwanne und deren Metalldeckel bestehende Metallkapsel abgeführt und von dort auf das Chassis des Rechners weitergeleitet, an welchem die Metallkapsel mit möglichst flächiger Auflage beispielsweise durch Verschraubung befestigt ist.

Die Metallwanne ist in vorteilhafter Weise der Form und Größe des in ihr unterzubringenden Festplatten-Laufwerks im wesentlichen angepaßt.

Eine für eine einfache Befestigung des als Metallplatte ausgebildeten Deckels auf der Metallwanne zweckmäßige Ausführungsform von Deckel und Wanne ist im Anspruch 3 angegeben.

Sollen Dickenunterschiede von unterschiedlich ausgebildeten Festplatten-Laufwerken bei Kapselung in einer Metallwanne bei gleichzeitig stattfindender Wärmeableitung automatisch ausgeglichen werden, so besteht der Deckel zur Abdeckung und Kapselung der Metallwanne in vorteilhafter Weise aus Federblech. Dieser aus Federblech bestehende Deckel ist dann in zweckmäßiger Weise mit einer zusätzlichen Verstärkungsplatte aus Standardblech oder aus Sandwichblech (z.B. 3M-Scotchdamp™-Sandwichblech) zur Dämmung von niederfrequentem Körperschall versehen. Der gegebenenfalls mit einer zusätzlichen Verstärkungsplatte ausgestattete Deckel aus Federblech wird in die dafür vorgesehene Öffnung der Schalldämmkapsel gedrückt und zwar direkt auf eine vorher über dem Festplatten-Laufwerk eingelegte Wärmeleitmatte. Es handelt es sich somit bei dieser Weiterbildung um eine neuartige Verschlußtechnik zum Einbau von Festplatten-Laufwerken.

Der aus Federblech bestehende Deckel kann in vorteilhafter Weise ohne Schrauben in der Öffnung der Metallwanne befestigt werden. Eine vorteilhafte diesbezügliche Weiterbildung ist im Anspruch 6 angegeben.

Die insbesondere zum Einsatz bei einem Personal Computer vorgesehene Vorrichtung nach der Erfindung wird im folgenden anhand von zwei in insgesamt sieben Figuren dargestellten Ausführungsbeispielen erläutert. Es zeigen:
FIG. 1 bis FIG. 4 jeweils in perspektivischer Ansicht das erste Ausführungsbeispiel einer Vorrichtung nach der Erfindung in vier aufeinanderfolgenden Montagezuständen,
FIG. 5 in perspektivischer Ansicht den Deckel einer Vorrichtung nach der Erfindung gemäß dem zweiten Ausführungsbeispiel, und
FIG. 6 und FIG. 7 jeweils in perspektivischer Ansicht dieses zweite Ausführungsbeispiel in zwei aufeinanderfolgenden Montagezuständen.

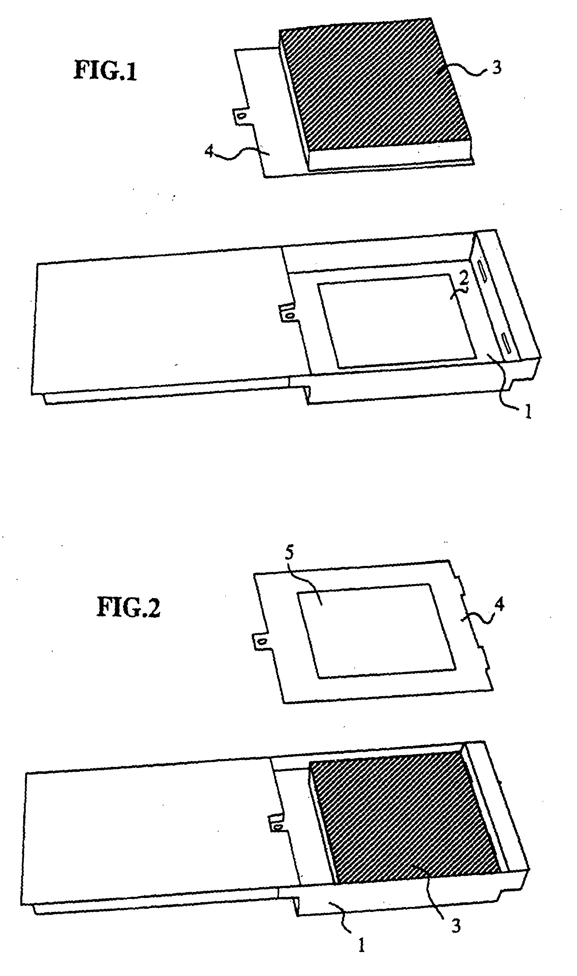

Die FIG. 1 bis 4 zeigen vier verschiedene Montagezustände eines ersten Ausführungsbeispiels einer Vorrichtung nach der Erfindung in perspektivischer Darstellung. In FIG. 1 ist auf den Boden einer Metallwanne 1 eine als thermisches Leitmaterial dienende Wärmeleitmätte 2 eingelegt, die elektrisch isoliert. Oberhalb der Metallwanne 1 ist ein in der Metallwanne 1 unterzubringendes handelsübliches Festplatten-Laufwerk 3 und darunter ein durch eine Metallplatte gebildeter Deckel 4 zum Abdecken der Metallwanne 1 dargestellt.

In FIG. 2 ist in die Metallwanne 1 auf die in FIG. 2 abgedeckte und deshalb nicht mehr sichtbare Wärmeleitmatte 2 das Festplatten-Laufwerk 3 eingelegt. Aus FIG. 2 ist ersichtlich, daß die verwendete Metallwanne 1 der Form und Größe des in ihr unterzubringenden Festplatten-Laufwerks 3 im wesentlichen angepaßt ist. In FIG. 2 ist oberhalb der Metallwanne 1 eine weitere elektrisch isolierende Wärmeleitmatte 5 und darunter der durch die Metallplatte gebildete Deckel 4 zum Abdecken der Metallwanne 1 dargestellt.

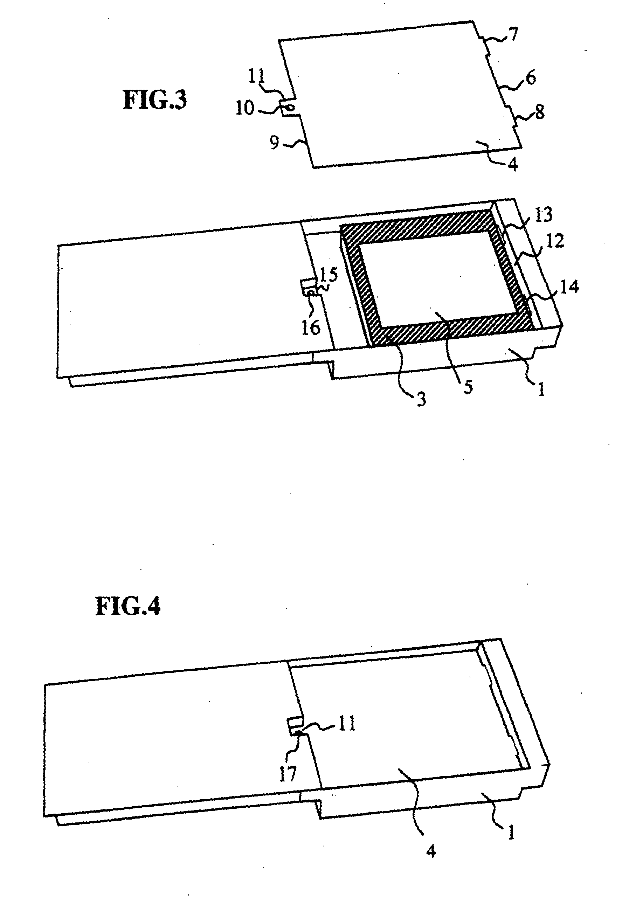

In FIG. 3 ist im nächsten Montagezustand die weitere Wärmeleitmatte 5 auf das Festplatten-Laufwerk 3 gelegt. Oberhalb der Metallwanne 1 ist als einziges noch nicht montiertes Teil lediglich noch der durch die Metallplatte gebildete Deckel 4 zum Abdecken der Metallwanne 1 dargestellt. Aus FIG. 3 ist ersichtlich, daß der Deckel 4 an einer Seite 6 zwei Vorsprünge 7 und 8 und an der gegenüberliegenden Seite 9 eine mit einer Bohrung 10 versehene Lasche 11 aufweist. In der Metallwanne 1 sind in einer Seitenwand 12 Schlitze 13 und 14 zur späteren Aufnahme der Vorsprünge 7 und 8 des Deckels 4 vorgesehen. Im Bereich der gegenüberliegenden Seitenwand 15 ist eine Gewindebohrung 16 zur späteren Befestigung einer durch die zugeordnete Bohrung 10 des Deckels 4 geführten Schraube 17 vorhanden.

Der abschließende Montagezustand ist in FIG. 4 dargestellt. Hierbei ist zur vollständigen Kapselung der als Metallplatte ausgebildete Deckel 4 in der Öffnung der Metallwanne 1 so positioniert und befestigt, daß das Festplatten-Laufwerk 3 zwischen den beiden Wärmeleitmatten 2 und 5 fest und unbeweglich, aber elastisch eingeklemmt ist. Dazu sind zum einen die beiden flachen Vorsprünge 7 und 8 des Deckels 4 in die Schlitze 13 und 14 der Metallwanne 1 eingeführt, und zum anderen ist die durch die Bohrung 10 der am Deckel 4 vorgesehenen Lasche 11 durchgeführte Schraube 17 in der Gewindebohrung 16 der Metallwanne 1 fest eingeschraubt.

Das in FIG. 4 nicht mehr sichtbare Festplatten-Laufwerk 3 ist somit in der durch die Metallwanne 1 und den Deckel 4 gebildeten Metallkapsel fest und elastisch eingelegt. Die beiden Wärmeleitmatten 2 und 5 stellen sicher, daß die Verlustwärme auf diese vollständig geschlossene Metallkapsel und von dort weiter an das Computer-Chassis abgeführt wird, an welchem die Metallkapsel z.B. durch Verschraubung befestigt ist. Zugleich wird mit der in FIG. 4 dargestellten Vorrichtung eine ausgezeichnete Lärm- und Körperschalldämmung erreicht. Mit der entsprechend FIG. 4 fertig zusammengebauten Vorrichtung wird gleichzeitig ein sicherer Berührungsschutz erzielt.

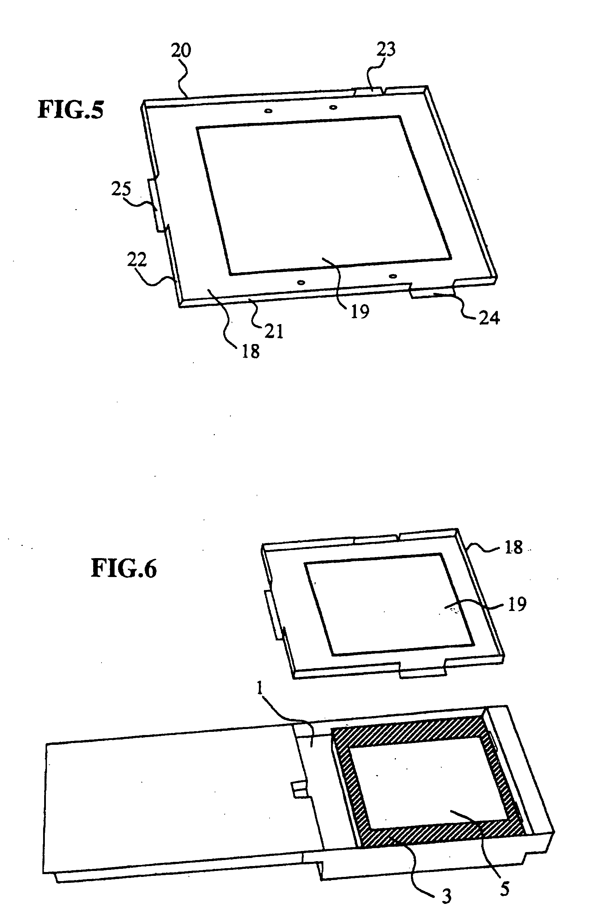

Die FIG. 5 bis 7 betreffen ein demgegenüber bezüglich der Abdeckung der Metallwanne durch den Deckel modifiziertes Ausführungsbeispiel einer Vorrichtung nach der Erfindung.

In FIG. 5 ist in diesem Zusammenhang in einer perspektivischen Ansicht ein als Metallplatte ausgebildeter Deckel 18 dargestellt, der allerdings nicht steif ausgebildet ist, sondern aus Federblech besteht. Dieser aus Federblech bestehende Deckel 18 ist auf seiner Oberfläche mit einer zusätzlichen Verstärkungsplatte 19 aus Standardblech oder aus Sandwichblech (z.B. 3M-Scotchdamp™) zur Dämmung von niederfrequentem Körperschall versehen. Der Deckel 18 weist in diesem Ausführungsbeispiel an zwei gegenüberliegenden Seiten 20 und 21 und an einer der beiden anderen Seiten, nämlich an der Seite 22, jeweils eine Haltekralle 23, 24 bzw. 25 auf.

In FIG. 6 ist in einem bereits fortgeschrittenen Montagezustand, der dem Montagezustand nach FIG. 3 des ersten Ausführungsbeispiels entspricht, die weitere Wärmeleitmatte 5 auf das Festplatten-Laufwerk 3 gelegt. Oberhalb der Metallwanne 1 ist als einziges noch nicht montiertes Teil lediglich noch der in FIG. 5 dargestellte Deckel 18 zum Abdecken der Metallwanne 1 dargestellt. Es wird an dieser Stelle darauf hingewiesen, daß bis zum in FIG. 6 dargestellten Montagezustand der Montagevorgang bei diesem Ausführungsbeispiel demjenigen des ersten und bereits anhand der FIG. 1 bis 4 beschriebenen Ausführungsbeispiels genau entspricht.

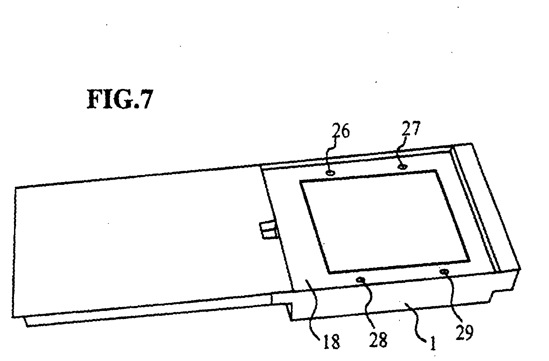

Der abschließende Montagezustand des zweiten Ausführungsbeispiels ist in FIG. 7 dargestellt. Hierbei ist zur vollständigen Kapselung der aus Federblech bestehende Deckel 18 in der Öffnung der Metallwanne 1 so positioniert und befestigt, daß das Festplatten-Laufwerk 3 zwischen den beiden Wärmeleitmatten 2 und 5 fest und unbeweglich, aber elastisch eingeklemmt ist. Dazu ist der Deckel 18 mittels der sich innen an den entsprechenden Seitenwänden der Metallwanne 1 einspreizenden Haltekrallen 23, 24 und 25 in der Öffnung der Metallwanne 1 befestigt, so daß das zwischen den beiden Wärmeleitmatten 2 und 5 liegende Festplatten-Laufwerk 3 aufgrund der federnden Wirkung des aus Federblech bestehenden Deckels 18 in der Metallwanne 1 federnd festgeklemmt ist. Durch diese federnde Ausbildung des Deckels 18 lassen sich ohne weiteres Dickenunterschiede von unterschiedlich ausgebildeten Festplatten-Laufwerken 3 bei der Kapselung in einer Metallwanne 1 bei gleichzeitiger Verlustwärmeableitung automatisch ausgleichen. Aufgrund der besonderen Ausführung des Deckels 18 aus Federblech und durch die Haltekrallen 23, 24 und 25, die an den entsprechenden Seitenwänden der Metallwanne 1 angreifen, sind bei der Montage keine Schrauben erforderlich. In dem in den FIG. 5 bis 7 dargestellten, aus Federblech bestehenden Deckel 18 sind noch vier Befestigungsbohrungen 26, 27, 28 und 29 vorgesehen, die für eine hängende Montage der das Festplatten-Laufwerk 3 in ihrem abschließenden Montagezustand gemäß FIG. 7 enthaltenden Vorrichtung dienen können.

## Patentansprüche

1. Vorrichtung zur Aufnahme eines zu einem Einbau in einen Computer vorgesehenen Festplatten-Laufwerks, unter Verwendung einer das Laufwerk (3) teilweise umschließenden Metallbügels und einer zwischen Laufwerk und Metallbügel vorhandenen Wärmeleitplatte (2) oder -matte aus Gummi oder dergleichen, die bei am Computer befestigten Metallbügel zwischen Laufwerk und Metallbügel elastisch eingeklemmt ist, **dadurch gekennzeichnet, daß** das Festplatten-Laufwerk (3) unter Zwischenlage der Wärmeleitmatte (2) in eine Metallwanne (1) eingelegt ist, daß auf dem Festplatten-Laufwerk eine weitere elektrisch isolierende Wärmeleitmatte (5) aufgelegt ist und daß zur vollständigen Kapselung ein als Metallplatte ausgebildeter Deckel (4) vorgesehen ist, der in der Öffnung der Metallwanne so positioniert und befestigt ist, daß das Festplatten-Laufwerk zwischen den beiden Wärmeleitmatten eingebettet fest und unbeweglich, aber elastisch eingeklemmt ist.

2. Vorrichtung nach Anspruch 1, **dadurch gekennzeichnet, daß** die Metallwanne (1) der Form und Größe des in ihr unterzubringenden Festplatten-Laufwerks (3) im wesentlichen angepaßt ist.

3. Vorrichtung nach Anspruch 1 oder 2, **dadurch gekennzeichnet, daß** der Deckel (4) an einer Seite (6) zwei oder mehr Vorsprünge (7, 8) und an der gegenüberliegenden Seite (9) mindestens eine mit einer Bohrung (10) versehene Lasche (11) aufweist und daß in der Metallwanne (1) in einer Seitenwand (12) Schlitze (13, 14) zur Aufnahme der Vorsprünge des Deckels und im Bereich der gegenüberliegenden Seitenwand (15) eine bzw. mehrere Gewindebohrungen (16) zur Befestigung von durch die zugeordneten Bohrungen des Deckels geführten Schrauben (17) vorgesehen sind.

4. Vorrichtung nach Anspruch 1 oder 2, **dadurch gekennzeichnet, daß** der als Metallplatte ausgebildete Deckel (18) aus Federblech besteht.

5. Vorrichtung nach Anspruch 4, **dadurch gekennzeichnet, daß** der aus Federblech bestehende Deckel (18) mit einer zusätzlichen Verstärkungsplatte (19) aus Standardblech oder aus Sandwichblech zur Dämmung von niederfrequentem Körperschall versehen ist.

6. Vorrichtung nach Anspruch 4 oder 5, **dadurch gekennzeichnet, daß** der aus Federblech bestehende Deckel (18) an zwei gegenüberliegenden Seiten (20, 21) und wenigstens an einer (22) der beiden anderen Seiten jeweils eine Haltekralle (23, 24, 25) aufweist und daß der Deckel mittels dieser sich innen an den entsprechenden Seitenwänden der Metallwanne (1) einspreizenden Haltekrallen in der Öffnung der Metallwanne befestigt ist, so daß das zwischen den beiden Wärmeleitmatten (2, 5) liegende Festplatten-Laufwerk (3) aufgrund der federnden Wirkung des aus Federblech bestehenden Deckels in der Metallwanne federnd festgeklemmt ist.

## Claims

1. Device for mounting a hard-disk drive intended for installation in a computer, using a metal strap partly enclosing the drive (3) and a heat-conducting plate (2) or mat made of rubber or the like, which is present between the drive and the metal strap and is flexibly clamped in between the drive and the metal strap when the metal strap is fastened on the computer, **characterized in that** the hard-disk drive (3) is placed into a metal tray (1) with the heat-conducting mat (2) in between, **in that** a further electrically insulating heat-conducting mat (5) is placed on the hard-disk drive and **in that**, for complete encapsulation, a cover (4) in the form of a metal plate is provided and is positioned and fastened in the opening of the metal tray in such a way that the hard-disk drive is clamped between the two heat-conducting mats in a firmly embedded and immovable, but flexible manner.

2. Device according to Claim 1, **characterized in that** the metal tray (1) is substantially adapted to the shape and size of the hard-disk drive (3) to be accommodated in it.

3. Device according to Claim 1 or 2, **characterized in that** the cover (4) has on one side (6) two or more projections (7, 8) and on the opposite side (9) at least one lug (11) provided with a bore (10), and **in that**, in the metal tray (1), slits (13, 14) for receiving the projections of the cover are provided in one side wall (12) and one or more threaded bores (16) for the fastening of bolts (17) led through the assigned bores of the cover are provided in the region of the opposite side wall (15).

4. Device according to Claim 1 or 2, **characterized in that** the cover (18) in the form of a metal plate consists of spring plate.

5. Device according to Claim 4, **characterized in that** the cover (18) consisting of spring plate is provided with an additional reinforcing plate (19) made of standard plate or of sandwich plate for the damping of low-frequency structure-borne sound.

6. Device according to Claim 4 or 5, **characterized in that** the cover (18) consisting of spring plate has a holding claw (23, 24, 25) on each of two opposite sides (20, 21) and at least on one (22) of the two other sides, and **in that** the cover is fastened in the opening of the metal tray by means of these holding claws, splaying inwards onto the corresponding side walls of the metal tray (1), so that the hard-disk drive (3) lying between the two heat-conducting mats (2, 5) is firmly clamped in the metal tray in a resilient manner on account of the resilient action of the cover consisting of spring plate.

## Revendications

1. Dispositif destiné à recevoir une unité de disque dur prévue pour être insérée dans un ordinateur, en utilisant un étrier métallique entourant partiellement l'unité (3) et une plaque (2) ou malte conductrice de la chaleur en caoutchouc ou analogue qui est présente entre l'unité et l'étrier métallique et qui est serrée élastiquement entre l'unité et l'étrier métallique lorsque ce dernier est fixé à l'ordinateur, **caractérisé en ce que** l'unité (3) de disque dur est mise dans une cuvette (1) métallique avec interposition de la malte (2) conductrice de la chaleur, **en ce qu'**il est posé sur l'unité de disque dur une autre matte (5) et isolante électriquement et **en ce qu'**il est prévu pour compléter l'encapsulage un couvercle (4) qui est constitué sous la forme d'une plaque métallique et qui est mis en position et fixé dans l'ouverture de la cuvette métallique, de sorte que l'unité de disque dur soit serrée de manière fixe, en étant incorporée aux deux mattes conductrices de la chaleur et sans possibilité de se déplacer, mais de manière élastique.

2. Dispositif suivant la revendication 1, **caractérisé en ce que** la cuvette (1) métallique est adaptée sensiblement à la forme et à la dimension de l'unité (3) de disque dur à y mettre.

3. Dispositif suivant la revendication 1 ou 2, **caractérisé en ce que** le couvercle (4) comporte sur un côté (6) deux ou plusieurs saillies (7, 8) et sur le côté (9) opposé au moins une patte (11) munie d'un trou (10) et **en ce qu'**il est prévu, dans la cuvette (1) métallique dans une paroi (12) latérale, des fentes (13, 14) de réception des saillies du couvercle et, dans la région de la paroi (15) latérale opposée, un ou plusieurs trous (16) taraudés de fixation de vis (17) passant dans les trous associés du couvercle.

4. Dispositif suivant la revendication 1 ou 2, **caractérisé en ce que** le couvercle (18) constitué sous la forme d'une plaque métallique est en tôle pour ressort.

5. Dispositif suivant la revendication 4, **caractérisé en ce que** le couvercle (18) en tôle pour ressort est muni d'une plaque (19) supplémentaire de renforcement en tôle normalisée ou en tôle sandwich pour atténuer le bruit de structure de basse fréquence.

6. Dispositif suivant la revendication 4 ou 5, **caractérisé en ce que** le couvercle (18) en tôle pour ressort comporte sur deux côtés (20, 21) opposés et sur au moins l'un (22) des deux autres côtés respectivement un crampon (23, 24, 25) de maintien et **en ce que** le couvercle est fixé dans l'ouverture de la cuvette métallique au moyen de ces crampons de maintien s'écartant à l'intérieur sur les parois latérales correspondantes dans la cuvette (1) métallique de manière à serrer élastiquement dans la cuvette métallique l'unité (3) de disque dur se trouvant entre les deux mattes (2, 5) conductrices de la chaleur en raison de l'action élastique du couvercle en tôle pour ressort
